# EUROPÄISCHE PATENTSCHRIFT

(11) **EP 2 949 607 B1**
(45) Veröffentlichungstag und Bekanntmachung des Hinweises auf die Patenterteilung: **17.08.2016**
(21) Anmeldenummer: 14169840.7
(22) Anmeldetag: 26.05.2014
(51) Int. Cl.: B65G 47/244

(54) **Vorrichtung zur Lage- und Ausrichtungsveränderung von Gegenständen sowie Verfahren zu deren Betrieb**
Device for changing the position and orientation of objects and method for the operation of the same
Dispositif de modification de la position et de l'orientation d'objets et son procédé de fonctionnement

(43) Veröffentlichungstag der Anmeldung: 02.12.2015
(73) Patentinhaber: Schweigert, Viktor, 57489 Drolshagen (DE)
(72) Erfinder: Schweigert, Viktor, 57489 Drolshagen (DE)
(74) Vertreter: Patentanwälte Bauer Vorberg Kayser

(56) Entgegenhaltungen:
- DE-A1-102006 011 585
- US-A- 4 394 898

## Beschreibung

Die Erfindung betrifft eine Vorrichtung zur Lageveränderung von dieser zuführbaren Gegenständen gemäß den Merkmalen im Oberbegriff von Patentanspruch 1 sowie ein Verfahren zum Betrieb einer Vorrichtung zur Lageveränderung von dieser zuführbaren Gegenständen nach dem Oberbegriff von Patentanspruch 10.

Der tagtägliche Warenverkehr stellt hohe Anforderungen an die jeweiligen Güterströme sowie deren Lieferketten. Insbesondere im Zusammenhang mit der Lagerhaltung ist hierfür eine jederzeit nachvollziehbare Aufbewahrung und Verwaltung der einzelnen Güter notwendig, um deren direkten Zugriff jederzeit sicherstellen zu können. Hier sind es vor allem die automatisierten Prozesse, welche entsprechend ausführende Anlagen bedürfen. Erst durch diese ist die erforderliche rasche und präzise Einlagerung sowie Ausfuhr der jeweiligen Güter überhaupt ermöglicht.

In diesem Zusammenhang kommt der Sortierung und Zuordnung der einzelnen Güterströme eine hohe Bedeutung zu. Hierfür bedarf es geeigneter Vorrichtungen, welche die zumeist über Fördersysteme bewegten Güter bereits während ihres Transports entsprechend behandeln. Dabei befinden sich die Güter in der Regel innerhalb einer Verpackung, so dass sie in Form von Paketen zu handhaben sind. Bei den Fördersystemen handelt es sich zumeist um Stetigförderer in Form von Förderbändern. Auf diesen werden die einzelnen Pakete nach- und/oder nebeneinander abgelegt und an anderer Stelle wieder aufgenommen oder herunterbewegt. Dabei sind sie mitunter genau auszurichten, um einen störungsfreien Betrieb der miteinander verbundenen Systeme zu gewährleisten. Dies ist insbesondere dann notwendig, wenn beispielsweise eine nach- oder zwischengeschaltete Einrichtung eine genaue Lage und Ausrichtung der ihr zugeführten Pakete verlangt.

Die zur besagten Lageveränderung der einzelnen Pakete ausgebildeten Vorrichtungen müssen deren kontinuierliche Verarbeitung bei gleichzeitig hoher Betriebssicherheit ermöglichen, um sich nahtlos in den notwendigen Transportfluss eingliedern zu können. Neben rein passiven Ausgestaltungen wie etwa in Förderrichtung integrierte Hindernisse sind auch aktive Vorrichtungen bekannt, welche der gezielten Umlenkung und/oder Ausrichtung der gegen diese laufenden Pakete dienen.

So ist aus der DE 10 2006 011 585 A1 eine Vorrichtung bekannt, welche zum Drehen derartiger Gegenstände vorgesehen ist. Dabei werden die Pakete über ein eine Förderrichtung vorgebendes Förderband zugeführt, auf welchem deren Drehung vollzogen wird. Hierzu weist die Vorrichtung ein um eine waagerechte Antriebsachse rotierbares Trägerbauteil auf, an welchem zwei Ausleger mit endseitig an diesen angeordneten Mitnehmern pendelnd gelagert sind. Dies meint, dass der jeweilige Mitnehmer aufgrund der auf ihn einwirkenden Schwerkraft quasi abwärtsgerichtet an dem zugehörigen Ausleger hängt. Dabei sind die Ausleger radial zur Antriebsachse beabstandet, so dass die Rotation des Trägerbauteils ein abwechselndes Heben und Senken der an diesen angeordneten Auslegern bewirkt. An den einzelnen Mitnehmern ist jeweils ein horizontal auskragender Hebelarm angeordnet. Bei der sich aufgrund der Rotation des Trägerbauteils zwangsläufig ergebenden Verlagerung der Mitnehmer in und gegen die Förderrichtung laufen die Hebelarme abwechselnd gegen einen Anschlag. Hierdurch wird eine begrenzte Rotation des jeweiligen Mitnehmers um eine vertikale Drehachse eingeleitet. Durch den sich beim Absenken des Mitnehmers auf den Gegenstand ergebenden Kontakt wird die Rotation des Mitnehmers letztlich in eine entsprechende Drehung des Gegenstandes übersetzt.

Durch das Zusammenwirken des aktiv rotierbaren Trägerbauteils und der Hebelarme mit dem Anschlag werden die notwendigen Antriebe bereits auf einen einzelnen die Antriebsachse drehenden Motor reduziert. Hierdurch wird bereits eine hohe Betriebssicherheit bei gleichzeitig geringem Wartungsaufwand erreicht. Gleichwohl erfordert die Anordnung der Hebelarme das Vorhandensein entsprechender Platzverhältnisse, da die Vorrichtung durch diese zwangsläufig verbreitert ist. Bauartbedingt sind Drehungen von über 90° nur schwer zu realisieren, wohingegen Drehungen von 180° und mehr ausgeschlossen sind. Allerdings kann dies notwendig sein, wenn beispielsweise ein an dem Gegenstand angebrachter maschinenlesbarer Code zu einer Scaneinheit ausgerichtet werden muss und der Gegenstand falsch herum auf dem Fördersystem abgelegt ist. Aufgrund der bewusst genutzten Hebelkräfte können sich zudem hohe Belastungen für die Lagerung der Mitnehmer und des Trägerbauteils ergeben, was wiederum einen erhöhten Verschleiß bewirken kann.

Angesicht der derzeit bekannten Ausgestaltungen derartiger Vorrichtungen und den im Einsatz mitunter starken Belastungen bei gleichzeitig hohen Anforderungen an die Betriebssicherheit bieten diese daher auch weiterhin durchaus noch Raum für Verbesserungen.

Vor diesem Hintergrund liegt der vorliegenden Erfindung die Aufgabe zugrunde, eine Vorrichtung zur Lageveränderung von ihr zugeführten Gegenständen dahingehend weiterzuentwickeln, dass diese neben einer robusten und platzsparenden Ausgestaltung bei gleichzeitig zuverlässigem Betrieb einen großen Drehradius zum Drehen der Gegenstände aufweist. Weiterhin soll ein Verfahren zum Betrieb einer gattungsgemäßen Vorrichtung aufgezeigt werden, mit dem deren Einsatzbereich über die reine Drehung von Gegenständen hinaus erweitert wird.

Die Lösung des gegenständlichen Teils dieser Aufgabe besteht nach der Erfindung in einer Vorrichtung mit den Merkmalen des Anspruchs 1. Der verfahrensmäßige Teil der Aufgabe wird durch ein Verfahren zum Betrieb einer gattungsgemäßen Vorrichtung mit den Merkmalen von Anspruch 10 gelöst. Vorteilhafte Weiterbildungen der vorgestellten Lösungen sind Gegenstand der jeweiligen Unteransprüche.

Hiernach wird eine Vorrichtung vorgestellt, welche sich insbesondere zur Lageveränderung von dieser zuführbaren Gegenständen eignet. In vorteilhafter Weise können die Gegenstände dabei über ein geeignetes Fördersystem wie beispielsweise ein Förderband bewegt sein. Bei den Gegenständen kann es sich bevorzugt um mit Gütern befüllte Verpackungen handeln, welche besonders bevorzugt in Form von Paketen vorliegen können.

Die Vorrichtung umfasst zunächst ein Trägerbauteil, welches um eine Antriebsachse herum rotierbar ist. Dabei ist die Antriebsachse nicht vertikal ausgerichtet, sondern gegenüber einer Senkrechten geneigt. Als Senkrechte wird eine sich aufgrund der Schwerkraft einstellende stehende Ausrichtung eines Pendels verstanden. Aufgrund der besagten Neigung schließen die Senkrechte und die Antriebsachse einen Winkel zwischen sich ein. Dabei kann der Winkel von 10° bis 90° betragen. Bevorzugt kann der Winkel von 45° bis 90° reichen. Besonders bevorzugt kann der Winkel einen Betrag von 65° bis 90° aufweisen. In vorteilhafter Weise kann der Winkel genau 90° betragen.

Ferner umfasst die Vorrichtung wenigstens einen mit dem Trägerbauteil verbundenen Ausleger. Selbstverständlich können auch zwei oder mehr Ausleger an dem Trägerbauteil angeordnet sein. Relevant hierbei ist, dass der Ausleger radial zur Antriebsachse beabstandet ist. Bei der Anordnung mehrerer Ausleger können diese bevorzugt auf einer gemeinsamen Kreisbahn um die Antriebsachse herum angeordnet sein. Demgegenüber können mehrere Ausleger auch unterschiedliche Abstände zu der Antriebsachse aufweisen, um beispielsweise auf die Verarbeitung unterschiedlich hoher Gegenstände oder die Länge eines Kontaktes zu den Gegenständen Einfluss zu nehmen, wie nachfolgend noch deutlich wird.

An dem wenigstens einen Ausleger ist ein hängend gelagerter Mitnehmer angeordnet, welcher für den eigentlichen Kontakt mit den Gegenständen vorgesehen ist. Hängend meint hierbei, dass dieser sich der Schwerkraft folgend stets abwärtsgerichtet an dem Ausleger befindet. Aufgrund der frei drehbaren Lagerung des Mitnehmers an dem Ausleger behält der Mitnehmer auch bei einer Rotation des Trägerbauteils seine hängende Ausrichtung bei. Dabei ist vorgesehen, dass der Mitnehmer zusätzlich um eine Drehachse herum rotierbar ist, um eine entsprechende Drehung der mit ihm in Kontakt gelangenden Gegenstände zu ermöglichen. Besagte Drehachse ist aufgrund der hängenden Lagerung des Mitnehmers ebenfalls stets der Schwerkraft folgend ausgerichtet. Dies heißt nicht zwingend, dass die Drehachse parallel zu der zuvor bereits beschriebenen Senkrechte verlaufen muss. So kann in Abhängigkeit von der Lagerung des Mitnehmers an dem Ausleger beispielsweise eine Neigung des Trägerbauteils und damit dessen Antriebsachse gegenüber der Senkrechten von weniger als 90° entsprechenden Einfluss auf die Ausrichtung der Drehachse haben. Allerdings wird im Rahmen der Erfindung bevorzugt, dass die Drehachse aufgrund der Schwerkraft stets parallel zur Senkrechten ausgerichtet ist.

Aufgrund der mittelbaren Anordnung des Mitnehmers an dem Trägerbauteil über den Ausleger wird letztlich der gewünschte temporäre Kontakt zu den einzelnen Gegenständen erreicht. Hierdurch ist der wenigstens eine Mitnehmer allein durch eine Rotation des Trägerbauteils sowohl in Richtung wenigstens eines der in seiner Lage zu verändernden Gegenstände absenkbar als auch wieder anhebbar. Insbesondere beim Absenken des Mitnehmers in Richtung des Gegenstandes oder auf diesen stellt sich der notwendige zumindest bereichsweise Kontakt zwischen Mitnehmer und Gegenstand ein. Selbstverständlich können auf diese Weise auch mehr als ein Gegenstand gleichzeitig mit dem Mitnehmer in Kontakt gebracht werden. Dies hängt im Wesentlichen von den Größenverhältnissen des Mitnehmers gegenüber den Gegenständen und umgekehrt ab.

Erfindungsgemäß umfasst die Vorrichtung einen Antriebskörper, welcher verdrehfest mit dem Mitnehmer verbunden ist. Verdrehfest meint, dass Antriebskörper und Mitnehmer entsprechend drehmomentübertragen miteinander verbunden sind. Der Antriebskörper ist dazu ausgebildet, um mit einem Bereich des Auslegers in Kontakt zu gelangen. Dabei ist vorgesehen, dass der Antriebskörper auf einer Lauffläche des Auslegers abrollt. Die Anordnung der Lauffläche an dem Ausleger bietet sich insofern an, als dass hierdurch kurze Wege zwischen den sich dabei berührenden Teilen der Vorrichtung eingehalten werden können. Der erfindungsgemäß vorgesehenen Funktionsweise kommt es allerdings gleich, wenn besagte Lauffläche beispielsweise direkt an dem Trägerbauteil angeordnet ist. Vielmehr kommt es darauf an, dass die Lauffläche verdrehfest angeordnet ist, so dass ihre Lage der Rotation um die Antriebsachse folgt. Dies ist insofern relevant, als dass der Antriebskörper während einer Rotation des Trägerbauteils derart auf der in Rede stehenden Lauffläche abrollt, dass sich hierdurch eine Weitergabe des aus der Rotation kommenden Drehmoments über die Lauffläche auf den Antriebskörper ergibt. Durch die verdrehfeste Verbindung zwischen Antriebskörper und Mitnehmer ergibt sich folglich die gewünschte Übertragung des Drehmoments auf den Mitnehmer. Auf diese Weise ist es nun möglich, dass die während der Rotation des Trägerbauteils stets eingehaltene hängende Ausrichtung des Mitnehmers in dessen Rotation um die vertikale Drehachse herum überführbar ist.

Im Ergebnis nutzt die Erfindung das Zusammenspiel von Schwerkraft und der Masse des Mitnehmers, um dessen Bestreben zur Beibehaltung seiner stets hängenden Lagerung an dem Ausleger in eine Rotation um die Drehachse zu übersetzen.

Der sich hieraus ergebende Vorteil liegt zunächst darin begründet, dass die erfindungsgemäße Vorrichtung auch weiterhin mit nur einem einzigen Antrieb auskommt. Gleichzeitig schrumpfen deren Abmessungen auf ein Minimum, da die Übertragung der Rotation des Trägerbauteils auf den Mitnehmer durch die überaus platzsparende Kombination aus Antriebskörper und Lauffläche erfolgt. Durch diese Ausgestaltung ergeben sich keinerlei zusätzlichen Hebelarme, welche der Übertragung von Kräften dienen und zu einer entsprechenden Belastung der Vorrichtung führen könnten. Dank der erfindungsgemäßen Lösung ist es nun ohne die Anordnung eines weiteren Antriebes erstmalig möglich, eine Rotation des Mitnehmers um 90° und mehr zu bewirken. Auch wenn die Rotation des Trägerbauteils abwechseln kann und damit eine Änderung der Rotationsrichtung möglich wäre, kann die Rotation des Trägerbauteils bevorzugt richtungsgleich erfolgen. Sofern das Abrollen des Antriebskörpers auf der Lauffläche dabei durchgehend erfolgt, kann der Mitnehmer quasi endlos um die Drehachse herum rotiert werden, solange das Trägerbauteil um seiner Antriebsachse herum dreht.

Überdies ist der Mitnehmer aufgrund der Erfindung in jeder seiner Stellungen um die Drehachse kontrollierbar, da bevorzugt ein durchgängiger Kraftschluss zwischen der als Kupplung wirkenden Verbindung aus Lauffläche und Antriebskörper vorherrschen kann. Gegenüber den im Stand der Technik bekannten Lösungen ist es demnach nicht möglich, den Mitnehmer in unenivünschter Weise aus seiner jeweiligen Stellung heraus zu überdrehen, wenn dieser mit einem Hindernis in Berührung kommt. Selbstverständlich können Lauffläche und Antriebskörper einen Reibschluss zwischen sich aufweisen, welcher dann entsprechend anpassbar sein kann. Auf diese Weise wäre bei Bedarf auch ein Durchrutschen dieser Kupplung möglich.

Auch ist es möglich, dass der Antriebskörper und/oder die Lauffläche etwaige Lücken in der Kraftübertragung derart aufweisen können/kann, dass die ansonsten durchgehend drehmomentübertragende Verbindung während der Rotation des Trägerbauteils an wenigstens einer Stelle kurzfristig unterbrochen ist.

Gemäß einer besonders bevorzugten Weiterentwicklung des grundsätzlichen Erfindungsgedankens können der Antriebskörper und die Lauffläche zumindest bereichsweise an diesen angeordnete oder ausgebildete Zähne aufweisen. Dabei ist vorgesehen, dass die Zähne des Antriebskörpers und die Zähne der Lauffläche in einen miteinander kämmenden Eingriff bringbar sind. Bei einer durchgehenden Anordnung der Zähne an Antriebskörper und Lauffläche können diese entsprechend durchgehend in einem kämmenden Eingriff miteinander stehen. Insofern können Antriebskörper und/oder Lauffläche auf diese Weise miteinander verzahnte Bereiche aufweisen. Der Vorteil besteht hierbei in der Gewährleistung einer sicheren und zwangsläufigen Übertragung des Drehmoments auf den Antriebskörper und damit auf den Mitnehmer. Gegenüber einem Reibschluss ergibt sich hierbei kein nennenswerter Abrieb, welcher eine mitunter intensive Wartung erfordern könnte.

Weiterhin ist vorgesehen, dass der Antriebskörper bevorzugt als Kegelstumpf ausgebildet sein kann oder einen solchen umfasst. Selbiges gilt auch für die Lauffläche, welche bevorzugt auf einem an dem Ausleger angeordneten oder ausgebildeten Kegelstumpf ausgebildet oder angeordnet sein kann. Wie bereits zuvor ausgeführt, kann die Lauffläche selbstverständlich auch an dem Trägerbauteil angeordnet sein, so dass für diesen Fall der Kegelstumpf an dem Trägerbauteil selbst angeordnet ist. Besonders bevorzugt kann der Kegelstumpf der Lauffläche an einem freien Ende des Auslegers angeordnet oder ausgebildet sein. Aufgrund der Ausgestaltung als Kegelstumpf tritt wenigstens eine entsprechend schräge Mantelfläche des Antriebskörpers und/oder der Lauffläche mit dem jeweils anderen Verbindungspartner in Kontakt.

Es versteht sich von selbst, dass im Zusammenhang mit der Lauffläche diese auf besagter schräger Mantelfläche angeordnet oder ausgebildet ist. Besonders bevorzugt können sowohl Antriebskörper als auch Lauffläche eine derartige kegelstumpfförmige Ausgestaltung aufweisen, so dass die miteinander in Kontakt tretenden Bereiche jeweils auf den schrägen Mantelflächen angeordnet oder ausgebildet sind. Auf diese Weise ergibt sich eine vorteilhafte große Übertragungsfläche bei gleichzeitiger Neigung der jeweiligen Längsrichtung der Kegelstümpfe zueinander. Besonders bevorzugt können die Mantelflächen der Kegelstümpfe um jeweils 45° geneigt sein, so dass deren Längsrichtungen in einem 90°-Winkel zueinander verlaufen.

Die konsequente Entwicklung des Erfindungsgedankens sieht in einer Weiterführung vor, dass der Ausleger einen ihm gegenüber verdrehbaren Lagerarm besitzen kann. Der Lagerarm ist dazu vorgesehen, um den Mitnehmer hängend an dem Ausleger zu halten. In vorteilhafter Weise kann der Lagerarm an einem freien Ende des Auslegers gelegen sein, um ausreichend Raum für den Mitnehmer gegenüber dem Trägerbauteil zu schaffen. Hierzu kann sich der Lagerarm bevorzugt in einer Längsrichtung des Auslegers erstrecken. Insofern kann der Mitnehmer über den Lagerarm in pendelnder Weise an dem Ausleger angeordnet sein. Verdrehbar meint hierbei, dass der Lagerarm das Bestreben des Mitnehmers seiner der Schwerkraft folgenden Ausrichtung unterstützt, indem der Lagerarm und damit der Mitnehmer bei einer Rotation des Trägerbauteils stets hängend und somit abwärtsgerichtet ist.

Nach einer bevorzugten Ausgestaltung können der Antriebskörper und der Mitnehmer durch eine bauliche Stabachse verdrehfest miteinander verbunden sind. Auf diese Weise ergibt sich eine Beabstandung von Antriebskörper und Mitnehmer zueinander. In vorteilhafter Weise kann sich die Stabachse in Richtung der Drehachse erstrecken, wobei sie um diese herum rotierbar ist. Besonders bevorzugt können eine Längsrichtung der baulichen Stabachse und die Drehachse deckungsgleich aufeinanderliegen. Mit anderen Worten kann die Längsrichtung der Stabachse die Drehachse für diese und somit auch für den Mitnehmer bilden. Durch die vorteilhafte verdrehfeste Verbindung von Antriebskörper und Mitnehmer durch die bauliche Stabachse bilden diese eine Funktionseinheit, welche eine einfache drehbare Lagerung derselben ermöglicht. Diese kann beispielsweise derart erfolgen, dass lediglich die bauliche Stabachse in einer entsprechenden Lageranordnung gehalten und geführt sein kann.

In diesem Zusammenhang ist erfindungsgemäß vorgesehen, dass besagte bauliche Stabachse in dem Lagerarm des Auslegers drehbar gelagert sein kann. Hierzu kann der Lagerarm die entsprechende Lageranordnung aufweisen, welche neben der erforderlichen Drehbarkeit die notwendige Steifigkeit gegenüber den im Betrieb der Vorrichtung auftretenden Krafteinwirkungen besitzt. In vorteilhafter Weise kann der Lagerarm zwischen dem Antriebskörper und dem Mitnehmer angeordnet sein, so dass eine einfache und robuste Lagerung der aus Antriebskörper und Stabachse sowie Mitnehmer gebildeten Einheit ermöglicht ist.

Die bauliche Stabachse stellt hierbei im Wesentlichen einen Hebelarm für den Mitnehmer gegenüber seiner Lagerung an dem Ausleger dar. Bei gleichbleibendem Gewicht des Mitnehmers kann mit zunehmender Länge der Stabachse ein größeres Drehmoment erzeugt werden, um den Mitnehmer um seine Drehachse herum zu rotieren. Dies ist insbesondere bei einem hohen Gewicht und/oder hohem Reibungskoeffizient zwischen Gewicht und Fördersystem relevant, um die angestrebte Drehung der Gegenstände vollziehen zu können. Dabei ist es das Zusammenspiel von veränderlicher Länge der Stabachse und veränderlichem Gewicht des Mitnehmers, welches wesentlichen Einfluss auf das so erzeugbare Drehmoment ausübt. Die jeweils geeignete Ausgestaltung obliegt hierbei dem Fachmann, welcher aufgrund der vorherrschenden Randbedingungen eine geeignete Abstimmung vornehmen wird.

Mit Blick auf die Ausgestaltung des Mitnehmers sind diverse Formen und Ausstattungen denkbar. Gemäß einer bevorzugten Ausgestaltung kann der Mitnehmer einen im Wesentlichen U-förmigen Querschnitt aufweisen. So kann der Mitnehmer zwei zueinander beabstandete Schenkel besitzen, welche über einen entsprechenden Steg miteinander verbunden sind. Dabei sind die Schenkel gleichgerichtet, wobei sie sich zur selben Seite des Steges von diesem weg erstrecken. In vorteilhafter Weise können Mitnehmer und Antriebskörper dabei über den Steg verdrehfest miteinander verbunden sein. Besonders bevorzugt kann der hierfür notwendige Ansatzbereich an dem Steg so gewählt sein, dass der an diesem gehaltene und frei hängende Mitnehmer im Lot steht. Mit anderen Worten kann besagter Ansatzbereich in seiner Lage an dem Steg in vorteilhafter Weise so angeordnet sein, dass sich keine unnötigen Belastungen mit Momenten aus der so erfolgenden Anbindung des Mitnehmers ergeben.

In Bezug auf das mögliche Vorhandensein der baulichen Stabachse kann diese dabei entsprechend an dem zuvor beschriebenen Ansatzbereich befestigt sein und so den Steg des Mitnehmers mittelbar mit dem Antriebskörper verbinden. Auf diese Weise wird die Stabachse und damit auch deren Lagerung, beispielsweise innerhalb des zuvor aufgezeigten Lagerarmes, keinerlei zusätzlicher bereits nur aus der Anbindung des Mitnehmers heraus resultierenden Momentenbelastung unterworfen.

Im Zusammenhang mit der zuvor aufgezeigten möglichen Ausgestaltung des Mitnehmers ist angedacht, dass wenigstens einer der Schenkel des Mitnehmers und dessen Steg einen Winkel von größer 90° zwischen sich einschließen können. Hiernach öffnet sich die Weite zwischen den Schenkeln zunehmend, wobei diese mit einer kleinen Weite am Steg beginnt und ihren größten Wert zwischen den freien Enden der sich gegenüberliegenden Schenkel aufweist. Besonders bevorzugt können beide Schenkel einen identischen Winkel gegenüber dem Steg aufweisen, so dass sich eine kontinuierliche Aufweitung des Mitnehmers zu den freien Enden seiner Schenkel hin ergibt.

Der sich hieraus ergebende Vorteil ist in einem entsprechende Toleranzen zulassenden Kontakt zwischen Mitnehmer und in seiner Lage zu veränderndem Gegenstand zu sehen. Da der Mitnehmer bei seiner Abwärtsbewegung auf den jeweiligen Gegenstand abgesenkt wird, steht somit zunächst eine große Öffnungsweite des Mitnehmers zur Verfügung, mit welcher der Mitnehmer den Gegenstand zumindest teilweise umgreift. Bei einer weiteren Absenkung des Mitnehmers rücken dessen Schenkel näher an den Gegenstand ran, so dass sich der notwendige Kontakt zu diesem einstellt, sofern nicht bereits mit wenigstens einem der Schenkel geschehen. Auf diese Weise können auch nicht exakt auf das Zentrum des Mitnehmers zulaufende Gegenstände aufgenommen werden, wobei sie während des Absenkens des Mitnehmers mehr oder weniger zwischen dessen Schenkeln zentriert werden. Aber auch in ihren äußeren Abmessungen variierende Gegenstände können hierdurch innerhalb einer entsprechenden Toleranz mit der erfindungsgemäßen Vorrichtung verarbeitet werden, was die Gefahr einer möglichen Fehlleitung oder gar einer Störung auf ein Minimum reduziert.

Aufgrund der möglichen pendelnden Anbindung des Mitnehmers ergibt sich ohnehin eine Möglichkeit für nicht verarbeitbare Gegenstände, den Mitnehmer aus ihrer Förderrichtung zu verdrängen, ohne eine direkte Störung oder gar Beschädigung der Vorrichtung zu provozieren.

Eine Weiterbildung der erfindungsgemäßen Vorrichtung sieht vor, dass zwischen den Schenkeln des Mitnehmers ein Mittel angeordnet sein kann, welches ein mögliches hindurchfahren eines Gegenstandes zwischen den Schenkeln verhindert. Dabei kann es sich beispielsweise um ein Anschlagelement handeln, gegen welches der jeweilige Gegenstand dann läuft. Auf diese Weise ist die ansonsten mögliche Fehlleitung eines Gegenstandes nahezu ausgeschlossen. Hier ist davon auszugehen, dass einzelne Gegenstände beispielsweise unterschiedliche Abstände voneinander aufweise können. So ist eine mögliche Synchronisierung von Vorrichtung und Zuführung der in ihrer Lage zu verändernden Gegenstände erschwert, was wiederum durch den Einsatz des Anschlagelements kompensierbar ist. In Kombination mit einer ausreichenden Weite zwischen den Schenkeln des Mitnehmers gegenüber den Abmessungen der Gegenstände kann folglich auch eine bereits eingetretene Drehung des Mitnehmers gegenüber der Förderrichtung kompensiert werden, so dass der Gegenstand dennoch zwischen die Schenkel gelangen und sich am Anschlagelement abstützen kann. Zudem verschafft die Anordnung eines Anschlagelements zusätzliche Zeit für die Drehung eines Gegenstandes, da dieser zunächst durch dieses aufgehalten wird.

Die nunmehr vorgestellte Vorrichtung zur Lageveränderung von dieser zuführbaren Gegenständen weist eine außerordentlich robuste sowie platzsparende Ausgestaltung auf. Dies liegt im Wesentlichen an der kompakten Bauweise, welche keinerlei zu den Seiten der Vorrichtung hin auskragende Elemente benötigt. Aufgrund der Reduzierung auf einen einzelnen Antrieb und die überaus wartungsarme Übertragung eines im Wesentlichen unter Nutzung der Schwerkraft erzeugbaren Drehmoments auf den Mitnehmer ermöglicht einen überaus zuverlässigen Betrieb der Vorrichtung. Eine der wesentlichsten Neuerungen für eine solche Vorrichtung unter Einsatz eines einzelnen Antriebes liegt in der deutlichen Vergrößerung des möglichen Drehradius zum Drehen der jeweiligen Gegenstände. Weiterhin ist die Erfindung auf ein Verfahren gerichtet, welches sich zum Betrieb einer Vorrichtung zur Lageveränderung von dieser zuführbaren Gegenständen eignet. Besonders bevorzugt kann es sich bei der so zu betreibenden Vorrichtung um eine wie zuvor aufgezeigte erfindungsgemäße Vorrichtung zur Lageveränderung von dieser zuführbaren Gegenständen handeln.

Dabei werden die in ihrer Lage zu verändernden Gegenstände beispielsweise auf einem geeigneten Fördersystem abgelegt und der Vorrichtung auf diese Weise zugeführt. Hierzu werden die einzelnen Gegenstände durch das Fördersystem in einer Förderrichtung bewegt. Bei der Förderrichtung kann es sich um eine lineare Richtung handeln. Selbstverständlich ist hierbei auch eine einfach oder mehrfach abgewinkelte, insbesondere mit Kurven versehene Förderrichtung denkbar.

Die Vorrichtung umfasst ein Trägerbauteil, welches um eine gegenüber einer Senkrechten geneigte Antriebsachse rotiert wird. Weiterhin umfasst die Vorrichtung wenigstens einen radial zur Antriebsachse beabstandeten und mit dem Trägerbauteil verbundenen Ausleger. Der Ausleger ist dazu ausgebildet, um einen hängend an diesem gelagerten Mitnehmer zu halten. Besagter Mitnehmer ist dazu vorgesehen, um mit den einzelnen Gegenständen in einen zumindest bereichsweisen Kontakt zu gelangen. Weiterhin wird der Mitnehmer um eine Drehachse herum rotiert, so dass die mit dem Mitnehmer in Kontakt gelangenden Gegenstände entsprechend gedreht werden können.

Aufgrund der frei hängenden Lagerung des Mitnehmers an dem Ausleger wird dieser dabei stets der Schwerkraft folgend ausgerichtet. Die notwendige Berührung zwischen Mitnehmer und Gegenstand wird dabei erreicht, indem der Mitnehmer durch eine Rotation des Trägerbauteils sowohl in Richtung wenigstens eines der Gegenstände abgesenkt und mit diesem in Kontakt gebracht wird als auch wieder angehoben wird.

Erfindungsgemäß ist der Mitnehmer mit einem Antriebskörper verdrehfest verbunden. Der Antriebskörper wird während der Rotation des Trägerbauteils auf einer dem Trägerbauteil gegenüber verdrehfesten Lauffläche des Auslegers abgerollt. Alternativ hierzu kann die Lauffläche beispielsweise auch an dem Trägerbauteil selbst angeordnet sein. In jedem Fall wird die stets eingehaltene hängende Ausrichtung des Mitnehmers in dessen Rotation um die vertikale Drehachse überführt, um die auf dem Fördersystem abgelegten Gegenstände zu drehen.

Dabei schließen die Antriebsachse und die Förderrichtung der Gegenstände einen Winkel von kleiner 90° zwischen sich ein. Hierdurch wird wenigstens einer der mit dem Mitnehmer in Kontakt stehenden Gegenstände über dessen Drehung hinaus manipuliert. Konkret wird der Gegenstand durch den Mitnehmer sowohl um die Drehachse herum auf dem Fördersystem rotiert als auch aus der Förderrichtung heraus in eine andere, beispielsweise parallele Laufrichtung verschoben. Hierzu kann das Fördersystem beispielsweise zwei Förderbänder aufweisen, wobei der jeweilige Gegenstand während seiner Drehung von einem der Förderbänder auf das jeweils andere Förderband verschoben werden kann.

Durch die zuvor aufgezeigten Maßnahmen kann der Einsatzbereich einer solchen Vorrichtung über die reine Drehung von Gegenständen hinaus in vorteilhafter Weise erweitert werden. Ursächlich hierfür ist im Wesentlichen die Schiefstellung der Antriebsachse gegenüber der Förderrichtung, woraus sich beispielsweise ein Förderband übergreifender Wirkradius für die Vorrichtung ergibt.

Die weiteren sich hieraus ergebenden Vorteile sowie mögliche Weiterentwicklungen wurden bereits im Zusammenhang mit der erfindungsgemäßen Vorrichtung zur Lageveränderung von dieser zuführbaren Gegenständen näher erläutert, so dass zur Vermeidung von Wiederholungen an dieser Stelle auf die vorherigen Ausführungen hierzu verwiesen wird. Die in diesem Zusammenhang aufgezeigten Merkmale und Maßnahme gelten für das erfindungsgemäße Verfahren entsprechend und werden in deren möglichen Kombination mit diesem ausdrücklich mit beansprucht.

Nachfolgend wird die Erfindung anhand eines in den Zeichnungen schematisch dargestellten Ausführungsbeispiels näher erläutert. Es zeigen:
- Fig. 1: die Darstellung einer erfindungsgemäßen Vorrichtung in einer perspektivischen Darstellungsweise,
- Fig. 2: die Vorrichtung aus Fig. 1 mit einzelnen Lageveränderungen ihrer rotierbaren Teile sowie
- Fig. 3: die Vorrichtung aus den Fig. 1 und 2 mit Blickrichtung auf deren Antriebsachse.

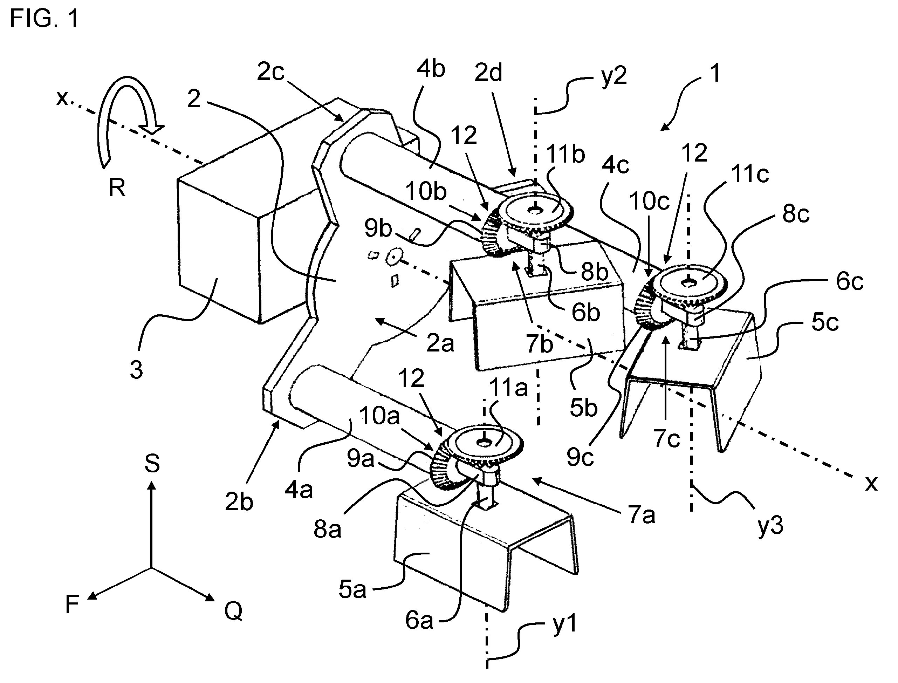

Aus Fig. 1 geht der schematische Aufbau einer erfindungsgemäßen Vorrichtung 1 hervor. Die Vorrichtung 1 dient der Lageveränderung von dieser in einer Förderrichtung F zuführbaren und ansonsten nicht weiter dargestellter Gegenstände.

Diese können beispielsweise auf einem ebenfalls nicht näher gezeigten Fördersystem abgelegt sein. Die Vorrichtung 1 umfasst ein Trägerbauteil 2, welches um eine Antriebsachse x herum rotierbar gelagert ist. Das somit aktiv drehbare Trägerbauteil 2 wird durch einen geeigneten Antrieb 3 rotiert, welcher entsprechend drehmomentübertragend mit dem Trägerbauteil 2 verbunden ist. Das Trägerbauteil 2 selbst weist vorliegend eine flache sternförmige Gestalt auf, welche sich aus einem mittleren Scheibenbereich 2a und an dessen Umfang angeordneten Fortsätzen 2b, 2c, 2d zusammensetzt.

Wie zu erkennen, erstreckt sich die Antriebsachse x in einer Querrichtung Q zur Förderrichtung F. Insofern greift die Vorrichtung 1 quer über das nicht näher gezeigte Fördersystem. Gleichzeitig ist die Antriebsachse x des um diese durch eine Rotation R herum rotierbaren Trägerbauteils 2 so ausgerichtet, dass sie gegenüber einer Senkrechten S geneigt ist. Vorliegend schließen Antriebsachse x und Senkrechte S einen Winkel von 90° zwischen sich ein.

In dem hier gezeigten Ausführungsbeispiel weist das Trägerbauteil 2 insgesamt drei Ausleger 4a, 4b, 4c auf. Diese sind vorliegend an den Fortsätzen 2b, 2c, 2d des Trägerbauteils 2 verdrehfest befestigt. Die Ausleger 4a, 4b, 4c sind dabei auf einer dem Antrieb 2 abgewandten Seite des Trägerbauteils 2 angeordnet, wobei sie sich allesamt richtungsgleich und parallel zur Richtung der Antriebsachse x erstrecken. In ihrer Anordnung sind die Ausleger 4a, 4b, 4c radial zur Antriebsachse x beabstandet, wobei sie vorliegend auf einer gemeinsamen Kreisbahn um die Antriebsachse x herum angeordnet sind.

An jedem der drei Ausleger 4a, 4b, 4c ist ein Mitnehmer 5a, 5b, 5c hängend gelagert. Aufgrund der auf die Mitnehmer 5a, 5b, 5c wirkenden Schwerkraft sind diese folglich grundsätzlich abwärtsgerichtet. In ihrer Anordnung an den Auslegern 4a, 4b, 4c ist jeder der Mitnehmer 5a, 5b, 5c um eine Drehachse y1, y2, y3 herum rotierbar.

Die jeweilige Drehachse y1, y2, y3 wird durch eine bauliche Stabachse 6a, 6b, 6c definiert, deren Längsrichtungen den Drehachse y1, y2, y3 der Mitnehmer 5a, 5b, 5c entsprechen. Die Ausleger 4a, 4b, 4c weisen an ihren dem Trägerbauteil 2 gegenüberliegenden freien Enden 7a, 7b, 7c jeweils einen daran angeordneten Lagerarm 8a, 8b, 8c auf. Dabei sind die Lagerarme 8a, 8b, 8c so an den freien Enden 7a, 7b, 7c angeordnet, dass diese gegenüber den Ausleger 4a, 4b, 4c; näherhin um deren jeweilige Längsrichtungen herum drehbar sind. Dabei sind die einzelnen Mitnehmer 5a, 5b, 5c durch den jeweils zugehörigen Lagerarm 8a, 8b, 8c hängend an dem jeweiligen Ausleger 4a, 4b, 4c gehalten. Hierzu sind die einzelnen Stabachsen 6a, 6b, 6c in dem zugehörigen Lagerarm 8a, 8b, 8c drehbar um die jeweilige Drehachse y1, y2, y3 herum gelagert. Aufgrund der hängenden Lagerung der Mitnehmers 5a, 5b, 5c sind die baulichen Stabachsen 6a, 6b, 6c und somit auch die jeweilige Drehachse y1, y2, y3 stets der Schwerkraft folgend ausgerichtet.

Die Ausleger 4a, 4b, 4c weisen an ihren freien Enden 7a, 7b, 7c angeordnete Kegelstümpfe 9a, 9b, 9c auf. Deren jeweilige schräge Mantelflächen sind dabei dem jeweils zugehörigen Lagerarm 8a, 8b, 8c zugewandt. Auf jeder der schrägen Mantelflächen ist ferner eine Lauffläche 10a, 10b, 10c angeordnet. Aufgrund der verdrehfesten Anordnung der Ausleger 4a, 4b, 4c an dem Trägerbauteil 2 und der ebenfalls verdrehfesten Anordnung der Kegelstümpfe 9a, 9b, 9c an den Auslegern 4a, 4b, 4c sind folglich auch die Lauffläche 10a, 10b, 10c gegenüber dem Trägerbauteil 2 verdrehfest.

An den jeweiligen Mitnehmern 5a, 5b, 5c gegenüberliegenden Enden der baulichen Stabachsen 6a, 6b, 6c ist jeweils ein Antriebskörper 11a, 11b, 11c angeordnet. Die Antriebskörper 11a, 11b, 11c sind jeweils als Kegelstumpf ausgebildet, welcher durch die baulichen Stabachsen 6a, 6b, 6c mit dem zugehörigen Mitnehmern 5a, 5b, 5c verdrehfest verbunden ist. Dabei ist der jeweilige Lagerarm 8a, 8b, 8c jeweils zwischen dem zugehörigen Antriebskörper 11a, 11b, 11c und dem zugehörigen Mitnehmern 5a, 5b, 5c gelegen. Sowohl die Antriebskörper 11a, 11b, 11c als auch die mit diesen korrespondierenden Laufflächen 10a, 10b, 10c weisen an den schrägen Mantelflächen ihrer Kegelstümpfe ersichtlich angeordnete Zähne 12 auf, wobei die Zähne 12 in einem miteinander kämmenden Eingriff stehen.

Aufgrund der Anordnung der Mitnehmer 5a, 5b, 5c an dem Trägerbauteil 2 sind die Mitnehmer 5a, 5b, 5c durch eine Rotation des Trägerbauteils 2 um seine Antriebsachse x sowohl in Richtung wenigstens eines der nicht näher gezeigten Gegenstände absenkbar und mit diesem in Kontakt bringbar als auch wieder anhebbar. Dabei sind die Antriebskörper 11a, 11b, 11c dazu ausgebildet, um während einer Rotation des Trägerbauteils 2 um seine Antriebsachse x derart auf der zugehörigen Lauffläche 10a, 10b, 10c abzurollen, dass die dabei stets eingehaltene hängende Ausrichtung der Mitnehmer 5a, 5b, 5c in deren Rotation um die jeweilige vertikale Drehachse y1, y2, y3 herum überführbar ist.

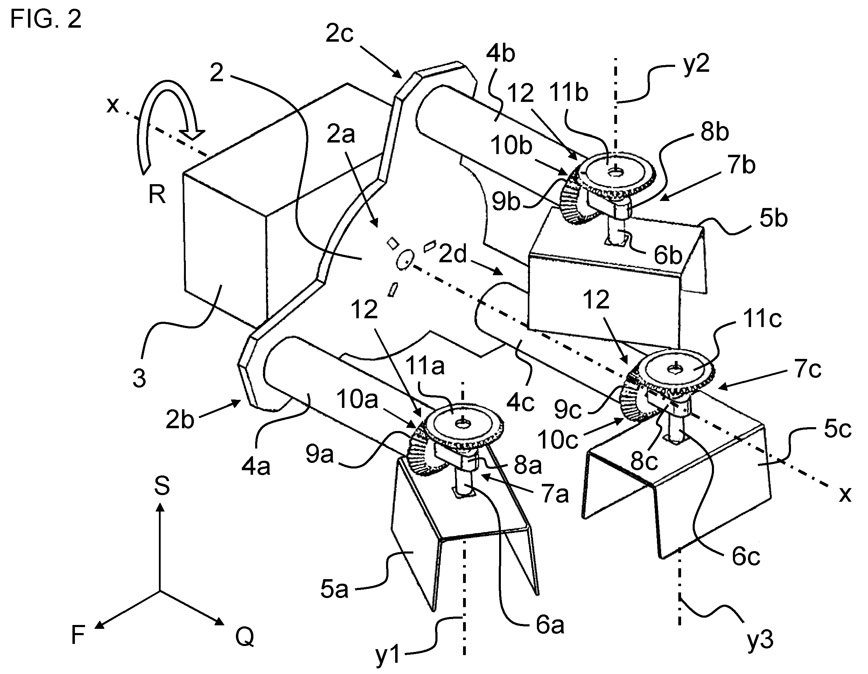

Fig. 2 zeigt die Vorrichtung 1 aus Fig. 1 nach einer kurzen Rotation des Trägerbauteils 2 um dessen Antriebsachse x herum. Wie zu erkennen, haben hierbei die einzelnen Mitnehmer 5a, 5b, 5c eine entsprechend andere räumliche Lage angenommen. Gleichzeitig wurden die einzelnen Mitnehmer 5a, 5b, 5c ein Stück weit um ihre jeweilige Drehachse y1, y2, y3 herum verdreht, so dass diese eine nunmehr veränderte Ausrichtung zeigen.

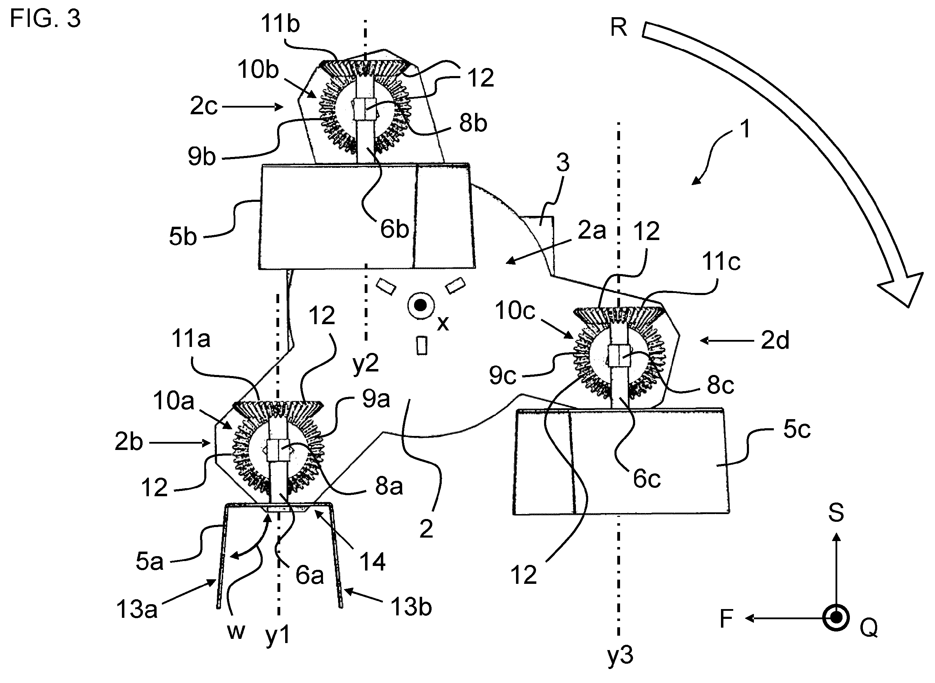

Fig. 3 ist eine Ansicht der Vorrichtung 1 in jener Stellung des Trägerbauteils 2 zu entnehmen, wie sie aus Fig. 1 hervorgeht. Mit Blick auf den mit Bezug auf die Darstellung von Fig. 3 links unten gelegenen Mitnehmer 5a wird deutlich, dass dieser (in stellvertretender Beschreibung für die Ausgestaltung der anderen Mitnehmer 5b, 5c) in seinem Querschnitt im Wesentlichen U-förmig ausgestaltet ist. Hierbei besitz der Mitnehmer 5a zwei zueinander beabstandete Schenkel 13a, 13b, welche über einen Steg 14 miteinander verbunden sind. Dabei ist der Mitnehmer 5a über seinen Steg 14 unter Zwischenschaltung der baulichen Stabachse 6a mit dem zugehörigen Antriebskörper 11a verdrehfest verbunden. Die Schenkel 13a, 13b sind dabei derart gegenüber dem Steg 14 geneigt, dass sie einen Winkel w von größer 90° zwischen sich und dem Schenkel 14 einschließen.

### Bezugszeichenliste:

- 1: Vorrichtung
- 2: Trägerbauteil von 1
- 3: Antrieb von 1
- 4a: Ausleger von 1
- 4b: Ausleger von 1
- 4c: Ausleger von 1
- 5a: Mitnehmer von 1
- 5b: Mitnehmer von 1
- 5c: Mitnehmer von 1
- 6a: bauliche Stabachse von 1
- 6b: bauliche Stabachse von 1
- 6c: bauliche Stabachse von 1
- 7a: freies Ende von 4a
- 7b: freies Ende von 4b
- 7c: freies Ende von 4c
- 8a: Lagerarm von 4a
- 8b: Lagerarm von 4b
- 8c: Lagerarm von 4c
- 9a: Kegelstumpf von 4a
- 9b: Kegelstumpf von 4b
- 9c: Kegelstumpf von 4c
- 10a: Lauffläche von 4a
- 10b: Lauffläche von 4b
- 10c: Lauffläche von 4c
- 11a: Antriebskörper an 6a
- 11b: Antriebskörper an 6b
- 11c: Antriebskörper an 6c
- 12: Zahn an 4a bis 4c und 11 a bis 11 c
- 13a: Schenkel von 5a bis 5c
- 13b: Schenkel von 5a bis 5c
- 14: Steg zwischen 13a und 13b

- F: Förderrichtung
- Q: Querrichtung
- R: Rotationsrichtung
- S: Senkrechte
- w: Winkel zwischen 13a, 13b und 14
- x: Antriebsachse von 1
- y1: Drehachse von 5a
- y2: Drehachse von 5b
- y3: Drehachse von 5c

## Patentansprüche

1. Vorrichtung zur Lageveränderung von dieser zuführbaren Gegenständen, insbesondere mittels eines Fördersystems, umfassend ein Trägerbauteil (2), welches um eine gegenüber einer Senkrechten (S) geneigte Antriebsachse (x) rotierbar ist sowie wenigstens einen radial zur Antriebsachse (x) beabstandeten und mit dem Trägerbauteil (2) verbundenen Ausleger (4a - 4c), an welchem ein hängend gelagerter Mitnehmer (5a - 5c) angeordnet und um eine Drehachse (y1 - y3) rotierbar ist, welche aufgrund der hängenden Lagerung des Mitnehmers (5a - 5c) stets der Schwerkraft folgend ausgerichtet ist, wobei der Mitnehmer (5a - 5c) durch eine Rotation (R) des Trägerbauteils (2) sowohl in Richtung wenigstens eines der Gegenstände absenkbar und mit diesem in Kontakt bringbar als auch wieder anhebbar ist, **gekennzeichnet durch** einen mit dem Mitnehmer (5a - 5c) verdrehfest verbundenen Antriebskörper (11 a - 11 c), welcher dazu ausgebildet ist, um während einer Rotation (R) des Trägerbauteils (2) derart auf einer dem Trägerbauteil (2) gegenüber verdrehfesten Lauffläche (10a - 10c) des Auslegers (4a - 4c) abzurollen, dass die dabei stets eingehaltene hängende Ausrichtung des Mitnehmers (5a - 5c) in dessen Rotation (R) um die vertikale Drehachse (y1 - y3) überführbar ist.

2. Vorrichtung nach Anspruch 1, **dadurch gekennzeichnet, dass** der Antriebskörper (11 a - 11 c) und die Lauffläche (10a - 10c) zumindest bereichsweise an diesen angeordnete Zähne (12) aufweisen, wobei die Zähne (12) in einem miteinander kämmenden Eingriff stehen oder bringbar sind.

3. Vorrichtung nach Anspruch 1 oder 2, **dadurch gekennzeichnet, dass** der Antriebskörper (11a - 11c) als Kegelstumpf ausgebildet ist und/oder die Lauffläche (10a - 10c) auf einem an dem Ausleger (4a - 4c) angeordneten Kegelstumpf (9a - 9c) angelegt ist.

4. Vorrichtung nach einem der Ansprüche 1 bis 3, **dadurch gekennzeichnet, dass** der Ausleger (4a - 4c) einen an seinem freien Ende (7a - 7c) gelegenen und gegenüber dem Ausleger (4a - 4c) verdrehbaren Lagerarm (8a - 8c) besitzt, wobei der Mitnehmer (5a - 5c) durch den Lagerarm (8a - 8c) hängend gehalten ist.

5. Vorrichtung nach einem der Ansprüche 1 bis 4, **dadurch gekennzeichnet, dass** der Antriebskörper (11 a - 11 c) und der Mitnehmer (5a - 5c) durch eine bauliche Stabachse (6a - 6c) verdrehfest miteinander verbunden sind, wobei die Stabachse (6a - 6c) sich in Richtung der Drehachse (y1 - y3) erstreckt und um diese herum rotierbar ist.

6. Vorrichtung nach Anspruch 5, **dadurch gekennzeichnet, dass** die bauliche Stabachse (6a - 6c) in dem Lagerarm (8a - 8c) drehbar gelagert ist, wobei der Lagerarm (8a - 8c) zwischen dem Antriebskörper (11 a - 11 c) und dem Mitnehmer (5a - 5c) angeordnet ist.

7. Vorrichtung nach einem der Ansprüche 1 bis 6, **dadurch gekennzeichnet, dass** der Mitnehmer (5a - 5c) zwei zueinander beabstandete Schenkel (13a, 13b) besitzt, welche über einen Steg (14) miteinander verbunden sind, wobei der Steg (14) mit dem Antriebskörper (11a - 11c) verdrehfest verbunden ist.

8. Vorrichtung nach Anspruch 7, **dadurch gekennzeichnet, dass** wenigstens einer der Schenkel (13a, 13b) und der Steg (14) einen Winkel (w) von größer (>) 90° zwischen sich einschließen.

9. Vorrichtung nach Anspruch 7 oder 8, **dadurch gekennzeichnet, dass** zwischen den Schenkeln (13a, 13b) ein Anschlagelement angeordnet ist.

10. Verfahren zum Betrieb einer Vorrichtung (1) zur Lageveränderung von dieser zuführbaren Gegenständen, insbesondere nach einem der vorhergehenden Ansprüche 1 bis 9, bei welchem der Vorrichtung (1) die auf einem Fördersystem abgelegten und in eine Förderrichtung (F) bewegten Gegenstände zugeführt werden, wobei die Vorrichtung (1) ein Trägerbauteil (2) umfasst, welches um eine gegenüber einer Senkrechten (S) geneigte Antriebsachse (x) rotiert wird sowie wenigstens einen radial zur Antriebsachse (x) beabstandeten und mit dem Trägerbauteil (2) verbundenen Ausleger (4a - 4c), an welchem ein hängend gelagerter Mitnehmer (5a - 5c) angeordnet und um eine Drehachse (y1 - y3) rotiert wird, welche aufgrund der hängenden Lagerung des Mitnehmers (5a - 5c) stets der Schwerkraft folgend ausgerichtet wird, wobei der Mitnehmer (5a - 5c) durch eine Rotation (R) des Trägerbauteils (2) sowohl in Richtung wenigstens eines der Gegenstände abgesenkt und mit diesem in Kontakt gebracht wird als auch wieder angehoben wird, **gekennzeichnet durch** einen mit dem Mitnehmer (5a - 5c) verdrehfest verbundenen Antriebskörper (11a - 11c), welcher während der Rotation (R) des Trägerbauteils (2) auf einer dem Trägerbauteil (2) gegenüber verdrehfesten Lauffläche (10a - 10c) des Auslegers (4a - 4c) abrollt, so dass die dabei stets eingehaltene hängende Ausrichtung des Mitnehmers (5a - 5c) in dessen Rotation um die vertikale Drehachse (y1 - y3) überführt wird, wobei die Antriebsachse (x) und die Förderrichtung (F) einen Winkel kleiner (<) 90° zwischen sich einschließen, wodurch wenigstens einer der mit dem Mitnehmer (5a - 5c) in Kontakt stehenden Gegenstände **durch** den Mitnehmer (5a - 5c) sowohl um die Drehachse (y1 - y3) herum auf dem Fördersystem rotiert als auch aus der Förderrichtung (F) heraus in eine andere Laufrichtung verschoben wird.

## Claims

1. A device for changing the position of items that can be fed to it, in particular by means of a conveying system, comprising a carrier component (2) that is rotatable about a driving axis (x) inclined relative to a vertical (S), and at least one boom (4a - 4c), which is radially spaced from the driving axis (x) and connected to the carrier component (2) and on which a driver (5a - 5c) mounted in a suspended manner is disposed and is rotatable about an axis of rotation (y1 - y3) that is always aligned so as to follow gravity due to the suspended mounting of the driver (5a - 5c), wherein the driver (5a - 5c), by means of a rotation (R) of the carrier component (2), can be lowered in the direction of at least one of the items and brought into contact with it as well as be lifted again, **characterized by** a driving body (11a - 11c), which is non-rotatably connected to the driver (5a - 5c) and which is configured to roll, during a rotation (R) of the carrier component (2), on a running surface (10a - 10c) of the boom (4a - 4c) that is non-rotatable relative to the carrier component (2) in such a way that the suspended alignment of the driver (5a - 5c), which is always maintained in the process, is transferable into its rotation (R) about the vertical axis of rotation (y1 - y3).

2. The device according to claim 1, **characterized in that** the driving body (11a - 11c) and the running surface (10a - 10c) have, at least in some portions, teeth (12) disposed on them, wherein the teeth (12) mesh or can be made to mesh.

3. The device according to claim 1 or 2, **characterized in that** the driving body (11a - 11c) is configured as a truncated cone and/or the running surface (10a - 10c) is made to rest on a truncated cone (9a - 9c) disposed on the boom (4a - 4c).

4. The device according to any one of the claims 1 to 3, **characterized in that** the boom (4a - 4c) has a bearing arm (8a - 8c), which is located at its free end (7a - 7c) and rotatable relative to the boom (4a - 4c), wherein the driver (5a - 5c) is held in a suspended manner by the bearing arm (8a - 8c).

5. The device according to any one of the claims 1 to 4, **characterized in that** the driving body (11a - 11c) and the driver (5a - 5c) are non-rotatably connected to each other by a structural rod axis (6a - 6c), wherein the rod axis (6a - 6c) extends in the direction of the axis of rotation (y1 - y3) and is rotatable about that.

6. The device according to claim 5, **characterized in that** the structural rod axis (6a - 6c) is rotatably mounted in the bearing arm (8a - 8c), wherein the bearing arm (8a - 8c) is disposed between the driving body (11a - 11c) and the driver (5a - 5c).

7. The device according to any one of the claims 1 to 6, **characterized in that** the driver (5a - 5c) has two spaced-apart legs (13a, 13b) which are connected to each other via a web (14), wherein the web (14) is non-rotatably connected to the driving body (11a - 11c).

8. The device according to claim 7, **characterized in that** at least one of the legs (13a, 13b) and the web (14) include an angle (w) greater (>) than 90° between them.

9. The device according to claim 7 or 8, **characterized in that** a stop member is disposed between the legs (13a, 13b).

10. A method for operating a device (1) for changing the position of items that can be fed to it, in particular according to any one of the preceding claims 1 to 9, in which the items placed on a conveying system and moved in a conveying direction (F) are fed to the device (1), wherein the device (1) comprises a carrier component (2) that is rotated about a driving axis (x) inclined relative to a vertical (S), and at least one boom (4a - 4c), which is radially spaced from the driving axis (x) and connected to the carrier component (2) and on which a driver (5a - 5c) mounted in a suspended manner is disposed and is rotated about an axis of rotation (y1 - y3) that is always aligned so as to follow gravity due to the suspended mounting of the driver (5a - 5c), wherein the driver (5a - 5c), by means of a rotation (R) of the carrier component (2), is lowered in the direction of at least one of the items and brought into contact with it as well is lifted again, **characterized by** a driving body (11a - 11c), which is non-rotatably connected to the driver (5a - 5c) and which, during the rotation (R) of the carrier component (2), rolls on a running surface (10a - 10c) of the boom (4a - 4c) that is non-rotatable relative to the carrier component (2), so that the suspended alignment of the driver (5a - 5c), which is always maintained in the process, is transferred into its rotation (R) about the vertical axis of rotation (y1 - y3), wherein the driving axis (x) and the conveying direction (F) include an angle of less than (<) 90° between them, whereby at least one of the items that are in contact with the driver (5a - 5c) is both rotated on the conveying system about the axis of rotation (y1 - y3) as well as shifted from the conveying direction (F) into another traveling direction by the driver (5a - 5c).

## Revendications

1. Dispositif de modification de la position d'objets aptes à être amenés à celui-ci, en particulier par le biais d'un système de convoyage, comprenant un composant porteur (2) que l'on peut faire tourner autour d'un axe d'entraînement (x) incliné par rapport à une verticale (S), ainsi qu'au moins un bras en porte-à-faux (4a - 4c) qui est espacé radialement par rapport à l'axe d'entraînement (x) et est relié audit composant porteur (2) et sur lequel un entraîneur (5a - 5c) logé à suspension est disposé que l'on peut faire tourner autour d'un axe de rotation (y1 - y3) qui, en raison du fait que ledit entraîneur (5a - 5c) est logé à suspension, est orienté toujours en suivant la gravité, dans lequel, par une rotation (R) du composant porteur (2), ledit entraîneur (5a - 5c) peut être aussi bien abaissé dans la direction de l'un au moins des objets et être mis en contact avec celui-ci que, à nouveau, être soulevé, **caractérisé par** un corps d'entraînement (11a - 11c) qui est relié d'une manière solidaire en rotation audit entraîneur (5a - 5c) et qui est configuré pour rouler, durant une rotation (R) du composant porteur (2), sur une surface de roulement (10a - 10c) du bras en porte-à-faux (4a - 4c), qui est fixe en rotation par rapport au composant porteur (2), de telle sorte que l'orientation suspendue de l'entraîneur (5a - 5c) qui est toujours maintenue lors de cela peut être transformée en une rotation (R) de celui-ci autour de l'axe de rotation (y1 - y3) vertical.

2. Dispositif selon la revendication 1, **caractérisé par le fait que** ledit corps d'entraînement (11a - 11c) et ladite surface de roulement (10a - 10c) présentent des dents (12) qui sont disposées au moins par zones sur ceux-ci, lesdites dents (12) s'engrenant les unes dans les autres ou pouvant être amenées à s'engrener les unes dans les autres.

3. Dispositif selon la revendication 1 ou 2, **caractérisé par le fait que** ledit corps d'entraînement (11a - 11c) est réalisé en tant que tronc de cône et/ou ladite surface de roulement (10a - 10c) est réalisée sur un tronc de cône (9a - 9c) disposé sur le bras en porte-à-faux (4a - 4c).

4. Dispositif selon l'une quelconque des revendications 1 à 3, **caractérisé par le fait que** le bras en porte-à-faux (4a - 4c) possède un bras de support (8a - 8c) qui est situé à l'extrémité libre (7a -7c) de celui-ci et est apte à être tourné par rapport au bras en porte-à-faux (4a - 4c), ledit entraîneur (5a - 5c) étant maintenu à suspension par ledit bras de support (8a - 8c).

5. Dispositif selon l'une quelconque des revendications 1 à 4, **caractérisé par le fait que** ledit corps d'entraînement (11a - 11c) et ledit entraîneur (5a - 5c) sont reliés d'une manière solidaire en rotation par l'intermédiaire d'un axe moyen de barre (6a - 6c) constructif, ledit axe moyen de barre (6a - 6c) s'étendant dans la direction de l'axe de rotation (y1 - y3) et peut tourner autour de celui-ci.

6. Dispositif selon la revendication 5, **caractérisé par le fait que** ledit axe moyen de barre (6a - 6c) constructif est logé à rotation dans le bras de support (8a - 8c), le bras de support (8a - 8c) étant disposé entre ledit corps d'entraînement (11a - 11c) et ledit entraîneur (5a - 5c).

7. Dispositif selon l'une quelconque des revendications 1 à 6, **caractérisé par le fait que** ledit entraîneur (5a - 5c) possède deux branches (13a, 13b) espacées l'une de l'autre qui sont reliées entre elles par une traverse (14), ladite traverse (14) étant reliée de manière solidaire en rotation au corps d'entraînement (11a - 11c).

8. Dispositif selon la revendication 7, **caractérisé par le fait que** l'une au moins des branches (13a, 13b) et la traverse (14) forment entre elles un angle (w) qui est supérieur (>) à 90°.

9. Dispositif selon la revendication 7 ou 8, **caractérisé par le fait qu'**un élément de butée est disposé entre les branches (13a, 13b).

10. Procédé destiné à faire fonctionner un dispositif (1) de modification de la position d'objets aptes à être amenés à celui-ci, en particulier selon l'une quelconque des revendications précédentes 1 à 9, dans lequel les objets déposés sur un système de convoyage et déplacés dans une direction de transport (F) sont amenés au dispositif (1), ledit dispositif (1) comprenant un composant porteur (2) que l'on fait tourner autour d'un axe d'entraînement (x) incliné par rapport à une verticale (S), ainsi qu'au moins un bras en porte-à-faux (4a - 4c) qui est espacé radialement par rapport à l'axe d'entraînement (x) et est relié audit composant porteur (2) et sur lequel un entraîneur (5a - 5c) logé à suspension est disposé que l'on fait tourner autour d'un axe de rotation (y1 - y3) qui, en raison du fait que ledit entraîneur (5a - 5c) est logé à suspension, est orienté toujours en suivant la gravité, dans lequel, par une rotation (R) du composant porteur (2), ledit entraîneur (5a - 5c) est aussi bien abaissé dans la direction de l'un au moins des objets et est mis en contact avec celui-ci que, à nouveau, soulevé, **caractérisé par** un corps d'entraînement (11a - 11c) qui est relié d'une manière solidaire en rotation audit entraîneur (5a - 5c) et qui, durant la rotation (R) du composant porteur (2), roule sur une surface de roulement (10a - 10c) du bras en porte-à-faux (4a - 4c), qui est fixe en rotation par rapport au composant porteur (2), de telle sorte que l'orientation suspendue de l'entraîneur (5a - 5c) qui est toujours maintenue lors de cela est transformée en une rotation de celui-ci autour de l'axe de rotation (y1 - y3) vertical, l'axe d'entraînement (x) et la direction de transport (F) formant entre eux un angle qui est inférieur (<) à 90° ce par quoi l'un au moins des objets qui est en contact avec l'entraîneur (5a - 5c) est aussi bien tourné autour de l'axe de rotation (y1 - y3) sur le système de convoyage que déplacé hors de la direction de transport (F) dans une autre direction de marche, par ledit entraîneur (5a - 5c).
